# EUROPEAN PATENT SPECIFICATION

(11) **EP 4 304 161 B1**
(45) Date of publication and mention of the grant of the patent: **10.09.2025**
(21) Application number: 23183975.4
(22) Date of filing: 06.07.2023
(51) Int. Cl.: H04M 1/60, G06F 3/01, B60K 37/00

(54) **METHOD FOR INTERACTING BETWEEN USER TERMINAL DEVICE AND VEHICLE, VEHICLE AND INTERACTIVE SYSTEM**
VERFAHREN ZUR INTERAKTION ZWISCHEN BENUTZERENDGERÄTEVORRICHTUNG UND FAHRZEUG, FAHRZEUG UND INTERAKTIVES SYSTEM
PROCÉDÉ D'INTERACTION ENTRE UN DISPOSITIF TERMINAL UTILISATEUR ET UN VÉHICULE, VÉHICULE ET SYSTÈME INTERACTIF

(30) Priority: 08.07.2022 CN 202210804539
(43) Date of publication of application: 10.01.2024
(73) Proprietor: Bayerische Motoren Werke Aktiengesellschaft, 80809 München (DE)
(72) Inventor: Sauts, Benoit, 89134 Blaustein (DE); Reis, Thoralf, 81247 München (DE); Zhang, Mingxuan, Peking, 100013 (CN)

(56) References cited:
- EP-A1- 2 387 202
- WO-A1-2021/238933
- WO-A1-2022/028447

## Description

### TECHNICAL FIELD

The present invention relates to a method for interacting between a user terminal device and a vehicle, a computer readable medium, a vehicle and an interaction system.

### BACKGROUND

At present, in order to improve the comfort and entertainment of the vehicle occupants, the vehicle might be equipped with a plurality of output devices. In particular, each occupant in the vehicle is respectively provided with at least one output device, such as a display, a speaker and the like, assigned thereto. However, due to relative concentration and limited number of the operation devices in the vehicle, it might be difficult for some occupants, especially the rear occupants, to interact well with the output devices assigned thereto. Moreover, the control of various output devices by means of such operation devices is also complicated and cumbersome.

There are also some IoV (Internet of Vehicles) applications known on devices such as a smart phone, for example, Carplay, Android Auto, Mirrorlink, Carlife, Hicar, and the like, which can realize the bidirectional control between a smart phone and a vehicle (mainly head unit). However, the operation of these IoV applications is complicated, so that it is also impossible to interact with individual output devices in the vehicle.

EP2387202A1 relates to an electronic device and a method of sharing contents of the electronic device with other devices. Said method comprises selecting external devices to display shared content; searching for connectable external devices, acquiring their specification information, and automatically choosing the most suitable external device for displaying specific content. Factors such as user location and distance between devices are considered in the selection process, simplifying user interaction and enabling automatic sharing and displaying content. However, in this document, all the devices are positioned in static scenes, namely indoors, such as in a living room, without mentioning how said method can be implemented in highly dynamic scenarios, such as in a vehicle.

Therefore, there is an urgent need to improve the interaction method between the vehicle occupants and the vehicle, enabling the vehicle occupants to utilize the output devices of the vehicle conveniently and efficiently.

### SUMMARY

The task of the present invention provides a method for interacting between a user terminal device and a vehicle according to claim 1, a computer readable medium according to claim 7, a vehicle according to claim 8 and an interaction system according to claim 9, which provides a more intuitive, smooth, convenient and comfortable interaction for the vehicle occupants, enabling them to utilize the output devices of the vehicle conveniently and efficiently.

The first aspect of the present invention relates to a method for interacting between a user terminal device and a vehicle according to claim 1, wherein said vehicle is provided with a plurality of output devices, said method comprising:
acquiring a position and attitude of the user terminal device in an interior space of the vehicle;
determining an output device pointed by the user terminal device based on the acquired position and attitude; and
performing data communication between the user terminal device and the vehicle to enable interaction between the user terminal device and the pointed output device in response to an operation of the user terminal device.

Within the scope of the present invention, the vehicle may be understood as any type of vehicle by which one or more persons may be transported. The vehicle is particularly a car, a truck, a motorcycle, a bus or the like. The vehicle may involve internal combustion engine vehicles (ICE), electric vehicles (EV), such as fuel cell vehicles (FCV) and battery electric vehicles (BEV), and hybrid electric vehicles (HEV), such as plug-in hybrid electric vehicles (PHEV) and Extended-Range Electric Vehicles (EREV).

Within the scope of the present invention, the output device may be understood as a display, a speaker and the like arranged in the vehicle, which can provide visual and/or auditory infotainment functions for the vehicle occupants. **In** the present invention, the vehicle should be equipped with a plurality of output devices, and in particular, each occupant in the vehicle should be respectively provided with at least one output device assigned thereto.

Within the scope of the present invention, the user terminal device may be understood as, for example, a smart phone, a tablet computer, a smart watch, a laptop computer or other portable mobile terminal devices. The user terminal device should have a communication function, which enables data communication between the user terminal device and the vehicle. This data communication between the user terminal device and the vehicle may be advantageously realized by wireless network connection (WLAN), Bluetooth connection or other wireless transmission technologies.

The method for interacting between a user terminal device and a vehicle according to the present invention provides that the position and attitude of the user terminal device in an interior space of the vehicle are acquired, and the output device pointed by the user terminal device among the plurality of output devices is determined accordingly, and data communication is subsequently performed between the user terminal device and the vehicle to enable interaction between the user terminal device and the pointed output device in response to an operation of the user terminal device. By way of the present application, the vehicle occupants can first align the user terminal device with the output device to indicate the output device intended to interact therewith. The vehicle determines the output device intended to interact therewith by acquiring the position and attitude of the user terminal device in an interior space of the vehicle. According to the operation of the vehicle occupant on the user terminal device, the interaction between the user terminal device and the pointed output device is finally realized by means of data communication between the user terminal device and the vehicle.

The method according to the present invention firstly realizes an intuitive interaction design, because the vehicle occupants can indicate their desired interaction objects simply by only aligning their user terminal devices, which conforms to a usual control logic. Secondly, after the user terminal device is pointed to the output device, the interaction with the pointed output device can be completed by simply operating the user terminal device, which is very smooth and convenient for the vehicle occupants. By way of this operation, the interaction between the user terminal device and the pointed output device is completed instantaneously without redirecting to complex interfaces of multiple layers and/or selecting function objects, which highlights the user friendliness. At the same time, compared with a traditional method of tapping a button, a touch screen and the like in the vehicle, the vehicle occupants can comfortably realize the interaction by hardly changing their sitting pose.

**In** addition, since the user terminal device may occupy any position and attitude in an interior space of the vehicle, the vehicle occupant may not only interact with the output device assigned thereto, but also interact with the output devices assigned to other vehicle occupants, which undoubtedly greatly expands the operability of each output device of the vehicle. For example, the vehicle occupant seated in the rear seat may interact with the output device in the front of the vehicle, while the vehicle occupant seated in the front seat may also interact with the output device in the rear of the vehicle.

According to one feature of the present invention, the position of the user terminal device in the interior space of the vehicle is acquired by means of ultra-wideband positioning technology. According to the invention, the position of the user terminal device in the interior space of the vehicle is acquired by means of a plurality of ultrawideband anchor antennas distributed in the vehicle and an ultrawideband positioning tag provided on the user terminal device. The Ultra Wide Band (UWB) positioning technology has the advantages of low system complexity, favorable multipath interference resistance, low power consumption, low cost, excellent penetrability, and ability to provide positioning accuracy of several centimeters, so that it is particularly well suitable for positioning an object in an interior space of the vehicle. The position of the user terminal device in the interior space of the vehicle may be determined, for example, by ultra-wideband positioning methods, such as an AOA positioning method, a TOF positioning method, a TOA positioning method and/or a TDOA positioning method. To that end, a plurality of (also that is, at least two especially at least three) ultra-wideband anchor antennas may be provided on the vehicle side, and an ultra-wideband positioning tag may be provided on the user terminal device side. Therefore, a pulse signal is transmitted through the ultra-wideband positioning tag provided on the user terminal device, so that the pulse signal may be received by the plurality of ultra-wideband anchor antennas, and the ultra-wideband positioning tag, that is, the user terminal device, is accurately positioned in an interior space of the vehicle by means of one or more of the above-described positioning method.

According to another feature of the present invention, the attitude of the user terminal device in the interior space of the vehicle is obtained by means of an attitude sensor of the user terminal device and a body attitude sensing means of the vehicle, and in particular the attitude of the user terminal device in the interior space of the vehicle is derived by a rotation transform of a device attitude vector sensed by said attitude sensor based on a body attitude vector sensed by the body attitude sensing means. Here, the attitude sensor of the user terminal device may be an inertial measurement unit, for example an accelerometer, a gyroscope and/or a magnetometer; the body attitude sensing means of the vehicle may also be an inertial measurement unit, for example an accelerometer, a gyroscope and/or a magnetometer. Since the user terminal device located inside the vehicle will constantly change its spatial direction with the travel of the vehicle, the device attitude vector and the body attitude vector are sensed by the attitude sensor of the user terminal device and the body attitude sensing means of the vehicle respectively, and the relative attitude vector of the user terminal device with respect to the vehicle body is calculated by a rotation transform, thereby accurately acquiring the attitude of the user terminal device in the interior space of the vehicle.

By combining the above-described two features of the present invention, a collaborative position and attitude determining solution is provided between the user terminal device and the vehicle, so as to accurately acquire the position and attitude of the user terminal device in an interior space of the vehicle, also that is, where the user terminal device is located in an interior space of the vehicle and its orientation. For example, a straight line may be extended based on the attitude of the user terminal device or the relative attitude vector with the position of the user terminal device in the interior space of the vehicle as a starting point, and the output device pointed by the user terminal device may be reliably determined by calculating the intersection of the straight line with the spatial position of which output device(s) in the vehicle.

According to one embodiment of the present invention, the operation of the user terminal device includes: tapping a button on a touch screen of the user terminal device, said button being preferably a sending button, a receiving button, a screen mirroring button and/or a screen extending button; and/or performing a gesture on the touch screen of the user terminal device, said gesture being preferably a slide up, a pull down, a throw and/or a pinch; and/or moving the user terminal device as a whole, said movement being preferably to cause the user terminal device as a whole to move abruptly, in particular towards or against the pointed output device. In the case where it is provided that the output device pointed by the user terminal device has been determined, the diversified operation possibilities of the user terminal device to finally realize the interaction with the output device only involves simple operations, such as tapping, touching gestures and/or overall movement, which are easily implemented by the vehicle occupants during the operation process, so that the interaction may be simply completed without complicated operation interfaces or multiple operation steps.

According to one embodiment of the present invention, said interaction of said user terminal device with the pointed output device includes: transmitting information content of said user terminal device to the pointed output device, and/or transmitting output content on the pointed output device to said user terminal device. In the present invention, on the one hand, the information content of the user terminal device may be sent to the pointed output device, so that the information content of the user terminal device may be shared to the pointed output device, and the vehicle occupant may configure the pointed output device individually. On the other hand, the output content on the pointed output device may be sent to the user terminal device, so that the user terminal device may also obtain the output content on the vehicle, thereby providing a way to share information from the vehicle to the user terminal device, and expanding the operation possibility of the output device of the vehicle.

According to one embodiment of the present invention, the method comprises: by transmitting the information content of said user terminal device to the pointed output device: playing a text, picture, audio and/or video from the user terminal device on the pointed output device; playing content corresponding to metadata on the pointed output device according to the metadata from the user terminal device; mirroring a screen display of the user terminal device to the pointed output device; and/or using the pointed output device as an extended device of the user terminal device. Alternatively or additionally, the method comprises: by transmitting the output content on the pointed output device to said user terminal device: playing a text, picture, audio and/or video from the pointed output device on the user terminal device; playing content corresponding to metadata on the user terminal device according to the metadata from the pointed output device; mirroring a screen display of the pointed output device to the user terminal device; and/or using the user terminal device as an extended device of the pointed output device.

According to one embodiment of the present invention, the output device pointed by the user terminal device is prompted on said user terminal device, and/or the output device is prompted to be pointed by the user terminal device on the output device pointed by the user terminal device. **In** this way, it is possible to feedback to the vehicle occupants with which output device(s) the user terminal device is currently aligned, so that the vehicle occupants are able to know that their desired output devices have been pointed, thereby more accurately confirming the pointed output device for subsequent operation. The prompt may be in the form of an icon, a text, an audio, and the like. According to one embodiment of the present invention, the output device pointed by the user terminal device and its neighboring output devices are prompted on said user terminal device, and/or a plurality of output devices pointed by the user terminal device are prompted on said user terminal device, in particular the spatially closest output device having the highest priority when the user terminal device points to a plurality of output devices. Due to a limited interior space of the vehicle, some output devices might be densely or even overlappingly distributed in some space corners for some positions of the user terminal device. **In** order to make the vehicle occupants more accurately confirm the output devices intended to interact with, icons are also used to indicate other output devices in the vicinity of the pointing direction and/or output devices overlapping in the pointing direction. At this time, the spatially closest output device may particularly have the highest priority, also that is, the output device spatially closest to the vehicle occupant is assigned with the highest priority, so that the interaction will be realized between the user terminal device and the output device with the highest priority by default when the vehicle occupant does not accurately select an output device.

The second aspect of the present invention relates to a computer readable medium according to claim 7 having a computer program stored thereon that, when executed by a processor implements a method for interacting between a user terminal device and a vehicle according to the present invention.

The third aspect of the present invention relates to a vehicle according to claim 8, capable of data connection with a user terminal device, and provided with a plurality of output devices, wherein said vehicle is configured to:
acquire a position and attitude of the user terminal device in an interior space of the vehicle;
determine the output device pointed by the user terminal device based on the acquired position and attitude; and
perform data communication with the user terminal device to enable interaction between the user terminal device and the pointed output device in response to an operation of the user terminal device.

According to one feature of the present invention, said vehicle includes a plurality of ultra-wideband anchor antennas distributed in the vehicle to obtain the position of the user terminal device in the interior space of the vehicle.

According to another feature of the present invention, said vehicle includes a body attitude sensing means such that a body attitude vector is sensed by said body attitude sensing means, and the attitude of the user terminal device in the interior space of the vehicle is derived by a rotation transform of a device attitude vector sensed by said attitude sensor based on said body attitude vector.

The fourth aspect of the present invention relates to an interactive system according to claim 9 comprising a user terminal device according to the present invention and a vehicle according to the present invention.

It is to be noted that the features, functions, effects and advantages according to one aspect of the present invention may also refer to the above-described descriptions according to other aspects of the present invention. In addition, various aspects described in the present invention may be combined with each other in multiple ways in accordance with the appended claims.

### BRIEF DESCRIPTION OF THE ACCOMPANYING DRAWINGS

FIG. 1 shows an exemplary flow chart of one embodiment of the method according to the present invention;
FIG. 2 shows an exemplary flow chart of one preferred embodiment of the method according to the present invention;
FIG. 3 shows a schematic view of one embodiment of the vehicle according to the present invention;
FIG. 4 shows a schematic view showing the attitudes of the vehicle and the user terminal device;
FIG. 5 shows a simplified schematic view of an interior space of the vehicle;
FIG. 6 shows a schematic block view of the vehicle and the user terminal device;
FIG. 7 shows an exemplary sequence view of interaction between the user terminal device and the vehicle according to the method according to the present invention;
FIGS. 8a and 8b show one interaction mode between the user terminal device and the pointed output device;
FIGS. 9a and 9b show another interaction mode between the user terminal device and the pointed output device;
FIGS. 10a and 10b show another interaction mode between the user terminal device and the pointed output device;
FIGS. 11a and 11b show another interaction mode between the user terminal device and the pointed output device;
FIGS. 12a and 12b show another interaction mode between the user terminal device and the pointed output device;
FIGS. 13a and 13b show another interaction mode between the user terminal device and the pointed output device;
FIG. 14 shows possible screen feedback on the user terminal device when the user terminal device points to the output device;
FIG. 15 shows possible screen feedback on the output device when the user terminal device points to the output device;
FIG. 16 shows a circumstance when the user terminal device points to the output device;
FIG. 17 shows another circumstance when the user terminal device points to the output device;
FIG. 18 shows one scenario of interaction between a plurality of user terminal devices and respective pointing output devices in the vehicle; and
FIG. 19 shows another scenario of interaction between a plurality of user terminal devices and respective pointing output devices in the vehicle.

### DETAILED DESCRIPTION

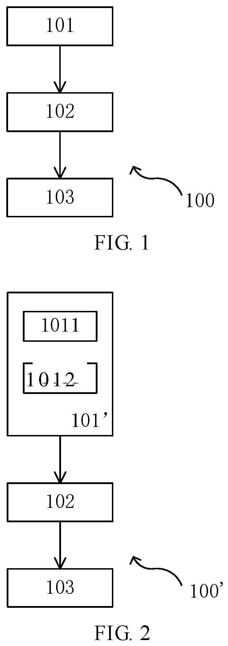

FIG. 1 shows an exemplary flow chart of one embodiment of the method according to the present invention. In FIG. 1, a method 100 for interacting between a user terminal device and a vehicle is provided, wherein said vehicle is provided with a plurality of output devices, said method 100 comprising:
Step 101: acquiring a position and attitude of the user terminal device in an interior space of the vehicle;
Step 102: determining an output device pointed by the user terminal device based on the acquired position and attitude; and
Step 103: performing data communication between the user terminal device and the vehicle to enable interaction between the user terminal device and the pointed output device in response to an operation of the user terminal device.

The method 100 provides a more intuitive, smooth, convenient and comfortable interaction for the vehicle occupants, enabling them to utilize the output devices of the vehicle conveniently and efficiently.

FIG. 2 shows an exemplary flow chart of one preferred embodiment of the method according to the present invention. Compared with the method 100 in FIG. 1, in the method 100' for interacting between a user terminal device and a vehicle shown in FIG. 2, Step 101' is divided into two substeps without limiting a performing sequence:
Step 1011: the position of the user terminal device in the interior space of the vehicle is acquired by means of ultra-wideband positioning technology; and
Step 1012: the attitude of the user terminal device in the interior space of the vehicle is obtained by means of an attitude sensor of the user terminal device and a body attitude sensing means of the vehicle.

In Step 1011, according to the invention, the position of the user terminal device in the interior space of the vehicle is acquired by means of a plurality of ultrawideband anchor antennas distributed in the vehicle and an ultrawideband positioning tag provided on the user terminal device. However, in Step 1012, in particular the attitude of the user terminal device in the interior space of the vehicle may be derived by a rotation transform of a device attitude vector sensed by said attitude sensor based on a body attitude vector sensed by the body attitude sensing means. These two steps will be introduced in more detail below.

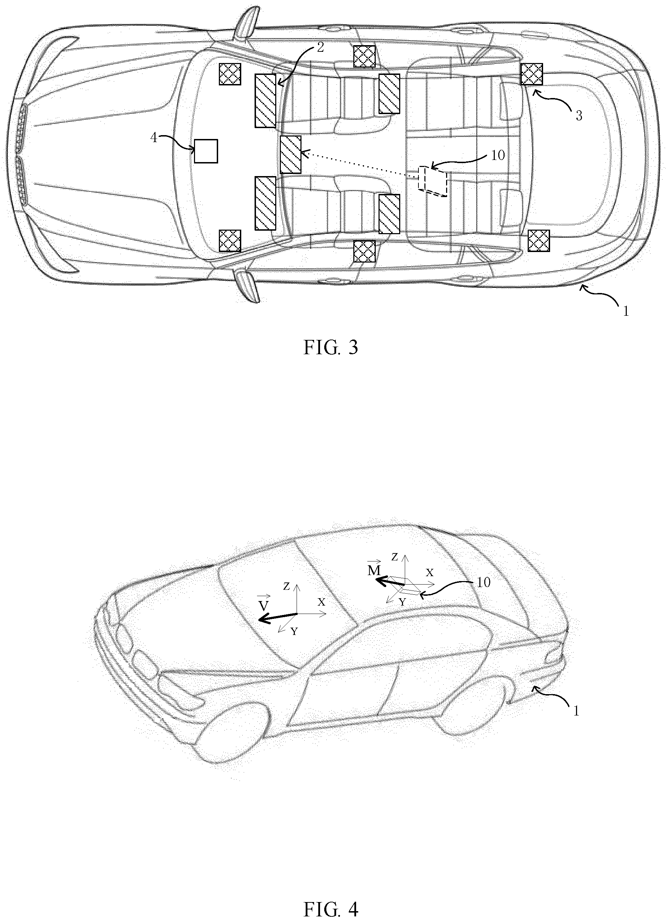

FIG. 3 shows a schematic view of one embodiment of the vehicle according to the present invention. In FIG. 3, the vehicle 1 is capable of data connection with a user terminal device 10, and provided with a plurality of output devices 2, wherein said vehicle 1 is configured to:
acquire a position and attitude of the user terminal device 10 in an interior space of the vehicle 1;
determine the output device pointed by the user terminal device 10 based on the acquired position and attitude; and
perform data communication with the user terminal device 10 to enable interaction between the user terminal device 10 and the pointed output device in response to an operation of the user terminal device 10.

FIG. 3 also shows an exemplary layout of the plurality of output devices 2 in the vehicle 1. The output device 2 represented by a rectangle with diagonal hatching includes, for example, a dashboard in front of the driver, a Head-Up Display (HUD) in front of the driver, a Center Information Display (CID) in the middle of the dashboard, a display in front of the front passenger (for example a HUD or a display integrated in the dashboard), a display on the back of the driver's seat, and a display on the back of the front passenger's seat. By way of such layout, each occupant in the vehicle is respectively provided with at least one output device assigned thereto. Not limited to the example shown in FIG. 3, the output device 2 may also involve a speaker or the like.

As also shown in FIG. 3, said vehicle 1 preferably includes a plurality of ultra-wideband anchor antennas 3 distributed in the vehicle 1 to obtain the position of the user terminal device 10 in the interior space of the vehicle 1. Six UWB anchor antennas 3 in total represented by a square with cross hatching are distributed on two sides of the front, middle and rear of vehicle respectively. These ultra-wideband anchor antennas 3 may receive a pulse signal from the ultra-wideband positioning tag in the user terminal device 10 and accurately position a location of the ultra-wideband positioning tag or the user terminal device 10 by means of the ultra-wideband positioning method.

As also shown in FIG. 3, said vehicle 1 preferably includes a body attitude sensing means 4. The body attitude sensing means may sense a body attitude vector, and acquire the attitude of the user terminal device in the interior space of the vehicle by a rotation transform of a device attitude vector from the user terminal device 10 based on the body attitude vector. The body attitude sensing means 4 may be an inertial measurement unit, for example, one or more of an accelerometer, a gyroscope and a magnetometer.

**In** FIG. 3, the user terminal device 10 according to the present invention is also represented by a cuboid represented by a dashed line. The user terminal device 10 is configured to:
provide data regarding a position and attitude of the user terminal device 10 to indicate that the user terminal device 10 points to an output device 2 in an interior space of the vehicle 1;
receive an operation of the user terminal device 10 by a user; and
perform data communication with the vehicle 1 to enable interaction between the user terminal device 10 and the pointed output device in response to said operation.

Here, the user terminal device 10 may include, for example, a smart phone, a tablet computer, a smart watch, a laptop computer or other portable mobile terminal devices. Although the features, functions, effects and advantages of the present invention are mainly described with a smart phone as an example in the accompanying drawings and embodiments, other mobile terminal devices may also be applied in the present invention in the same or a similar way.

The user terminal device 10 located in the vehicle shown in FIG. 3 may be manually held by a vehicle occupant (not shown). **In** order to interact with a particular output device 2 in the vehicle, the vehicle occupant may make the user terminal device 10 present the following attitude, that is, the user terminal device 10 is aligned with at least one of the respective output devices 2, and in particular, an extension line of its longitudinal extension direction (indicated by a dashed line in FIG. 3) falls into the surface of the output device 2. Here, the longitudinal extension direction of the user terminal device 10 may be defined as a direction extending from a center point of the user terminal device 10 to a top end of the device along a straight line where its longest side is situated. Not limited to this, the above-described attitude and longitudinal extension direction (also i.e., the device attitude vector below) may be defined differently in other types of user terminal devices 10 than a smart phone according to their usage modes and usage scenarios.

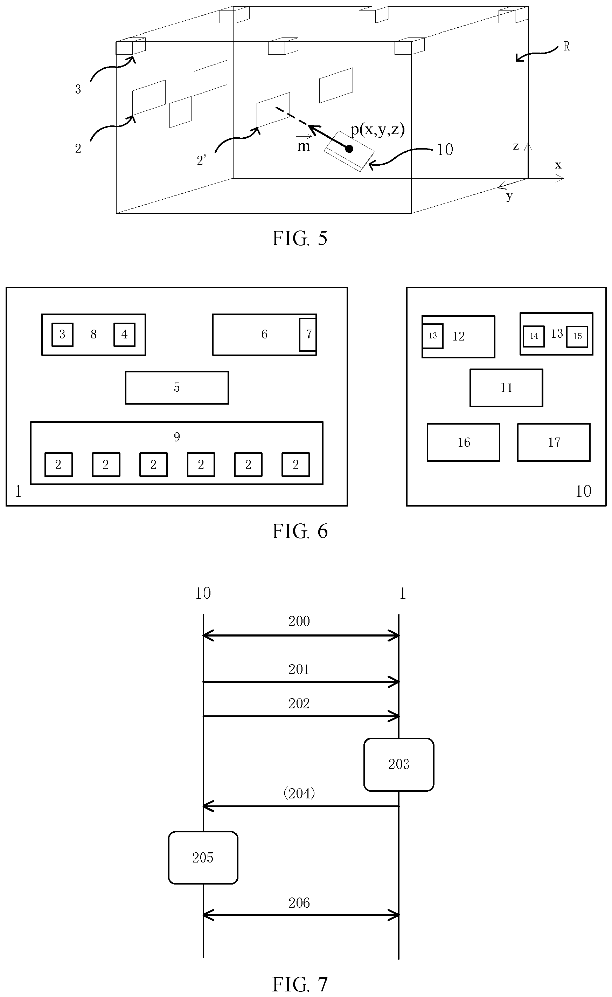

The acquisition of the position and attitude of the user terminal device 10 in an interior space of the vehicle 1 and the determination of the output device pointed by the user terminal device accordingly will be described in more detail below with reference to FIGS. 4 and 5.

FIG. 4 shows a schematic view showing the attitudes of the vehicle and the user terminal device. Here, the attitude of the vehicle 1 may be represented by the body attitude vector ***̅V̅*̅**. The body attitude vector ***̅V̅*̅** may be, for example, a unit direction vector of a longitudinal direction of the vehicle (or a heading direction of the vehicle 1) in the world coordinate system (X, Y, Z). The body attitude vector ***̅V̅*̅** may be sensed by the body attitude sensing means 4 of the vehicle 1, for example. Similarly, the attitude of the user terminal device 10 may be represented by the device attitude vector ***̅M̅*̅**. The device attitude vector ***̅M̅*̅** may be, for example, a unit direction vector of the above-described longitudinal direction of the user terminal device 10 in the world coordinate system (X, Y, Z). The device attitude vector ***̅M̅*̅** may be sensed by means of an attitude sensor of the user terminal device 10, for example. The device attitude sensor may be an inertial measurement unit, for example, one or more of an accelerometer, a gyroscope and a magnetometer.

FIG. 5 shows a simplified schematic view of an interior space of the vehicle. Here, for example, the interior space R of the vehicle 1 may be abstracted into a three-dimensional space having a cuboid shape, and the respective output devices 2 and the respective ultra-wideband anchor antennas 3 of the vehicle 1 are distributed at different positions in the interior space R. The user terminal device 10 of the vehicle occupant is also located in this interior space R and points to one of the pointed output devices 2'. Here, the position coordinates and vectors may be described with reference to the vehicle coordinate system (x, y, z) as shown in FIG. 5.

In order to realize the interaction between the user terminal device 10 and one or some of the output devices 2, first of all, it is necessary to acquire the position and attitude of the user terminal device 10 in an interior space R of the vehicle 1. Preferably, the position p(x, y, z) of the user terminal device 10 in an interior space R of the vehicle 1 may be acquired by means of ultra-wideband positioning technology. In particular, such position may be acquired by means of a plurality of ultrawideband anchor antennas 3 distributed in the vehicle 1 and an ultrawideband positioning tag (not shown) provided on the user terminal device 10. Specifically, a pulse signal is transmitted through the ultra-wideband positioning tag provided on the user terminal device 10, so that the pulse signal may be received by the plurality of ultra-wideband anchor antennas 3, and next the position p(x, y, z) of the ultra-wideband positioning tag, that is, the user terminal device 10, is calculated by an ultra-wideband positioning method, such as an AOA positioning method, a TOF positioning method, a TOA positioning method and/or a TDOA positioning method. Further, the attitude, also that is, the in-vehicle attitude vector ***̅m̅*̅,** of the user terminal device 10 in the interior space R of the vehicle 1 may be derived by a rotation transform of a device attitude vector M sensed by said attitude sensor of the user terminal device 10 based on a body attitude vector ***̅V̅*̅** sensed by the body attitude sensing means 4 of the vehicle 1. In the case where the position p(x, y, z) and attitude of the user terminal device 10 in an interior space R of the vehicle 1 or the or the in-vehicle attitude vector ***̅m̅*̅** are acquired, the output device 2' pointed by the user terminal device 10 may be determined by geometric calculation. Here, it is possible to consider whether the straight line starting from the position p(x, y, z) along a direction of the in-vehicle attitude vector ***̅m̅*̅** intersects with an abstract plane of each output device 2 in an interior space R. However, it is also possible to consider that different solid angle ranges are assigned for the position p(x, y, z) of the user terminal device 10, and each solid angle range represents one output device 2, and the output device 2' pointed by the user terminal device 10 is determined according to which solid angle range where the in-vehicle attitude vector ***̅m̅*̅** is situated.

FIG. 6 shows a schematic block view of the vehicle and the user terminal device.

The vehicle 1 includes, for example, a head unit 5, a communication system 6, a positioning system 8 and an infotainment system 9. These systems are connected to each other by a data bus system of the vehicle, for example. The communication system 6 may include a vehicle interface 7. The vehicle 1 may be in data networking with other devices, such as the user terminal device 10 through the vehicle interface 7. Here, the vehicle interface 7 may be formed according to any radio standard, for example Bluetooth standard, a wireless local area network (WLAN) standard according to the IEEE-802.11 family, and/or a near field communication standard (NFC). The positioning system 8 may include an ultra-wideband anchor antenna 3 and a body attitude sensing means 4 as described above. The infotainment system 9 may include a plurality of output devices 2. The output device 2 may be a display, a speaker and the like in the vehicle 1, which can provide visual and/or auditory infotainment functions for the vehicle occupants: playing multimedia content such as text, picture, audio and/or video; displaying a user graphic interface; and display vehicle information. In particular, the output device 2 may also be integrated with an input function, such as a touch input function.

The user terminal device 10 may include a processor 11, a communication unit 12, a positioning unit 13, an I/O unit 16, and a memory 17 which are in data connection with each other. The communication unit 12 includes a device interface 13, which may be formed according to any radio standard, such as Bluetooth standard, a mobile radio standard according to Global System for Mobile Communications (GSM), G2, G3, G4 and/or G5, a wireless local area network (WLAN) standard according to the IEEE-802.11 family, and/or a near field communication standard (NFC). The positioning unit 13 may include an ultra-wideband positioning tag 14 and an attitude sensor 15. The I/O unit 16 may be, for example, a touch-sensitive display screen or a touch screen, so that it is possible to display a graphic interface for a user and receive an operation of a user terminal device, such as a touch input of a user. The memory 17 may store applications, multimedia content, metadata, and the like. Here, the metadata may include, for example, a Uniform Resource Locator (URL), a multimedia content identifier, and the like.

FIG. 7 shows an exemplary sequence view of interaction between the user terminal device and the vehicle according to the method according to the present invention. After the user terminal device 10 enters the vehicle 1, first of all, creating 200 a communication connection is performed between the user terminal device 10 and the vehicle 1. It is assumed that the user terminal device 10 and the vehicle 1 have been paired, so that the vehicle 1 has a credential of the user terminal device 10, and the user terminal device 10 has a credential of the vehicle 1. Creating 200 a communication connection may be performed by known means in the art according to the communication protocol in use, wherein it is possible to perform, for example, scanning, wake-up, challenge, challenge response, setting a communication channel, and performing a secure handshake. Next, the vehicle occupant may preferably interact with the vehicle 1 by starting an application program (for example, APP, especially an OEM APP of a vehicle manufacturer and a service provider) on the user terminal device 10. Here, the user terminal device 10 may provide data regarding a position and attitude of the user terminal device 10 to the vehicle 1 so as to indicate that the user terminal device 10 points to an output device 2 in an interior space R of the vehicle 1. This includes, for example: sending 201 an ultra-wideband pulse signal and sending 202 a device attitude vector sensed by the attitude sensor 15. Thus, the vehicle 1 may acquire the position and attitude of the user terminal device 10 in an interior space R of the vehicle 1 as described above, and determine 203 the output device 2' pointed by the user terminal device 10 according to the acquired position and attitude. Next, alternatively, the vehicle 1 feedbacks 204 the currently pointed output device 2' to the user terminal device 10. In this way, for example, the output device 2' pointed by the user terminal device 10 may be prompted on the user terminal device 10. Next, an operation of the user terminal device 10 is received 205. Then, data communication 206 is performed between the user terminal device 10 and the vehicle 1 to enable interaction between the user terminal device and the pointed output device 2' in response to an operation of the user terminal device 10. Here, data communication may be implemented particularly through secure connection, for example, by means of a bidirectional TLS protocol based on TCP/IP SOCKET.

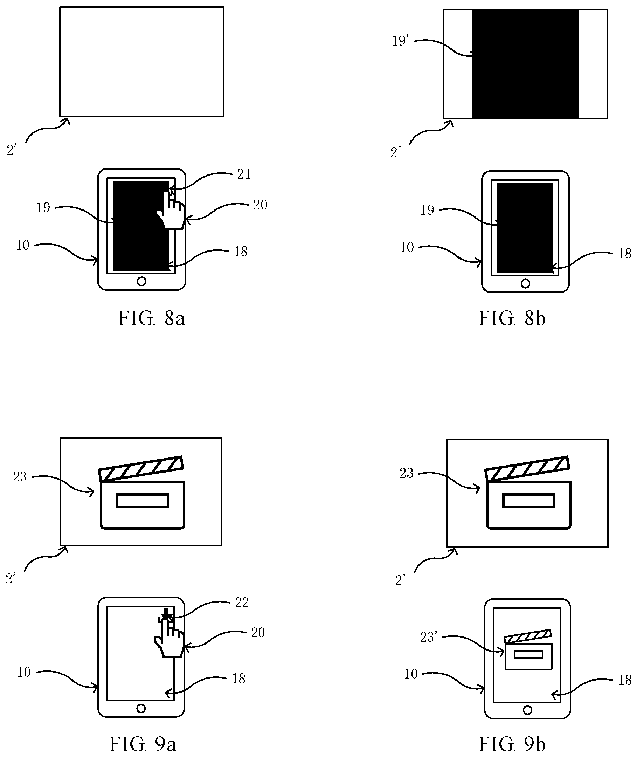

By way of FIGS. 8a to 19, the interaction between the user terminal device 10 and the pointed output device 2' according to the present invention and the possible operations associated therewith will be introduced below.

FIGS. 8a and 8b show one interaction mode between the user terminal device 10 and the pointed output device 2'. FIG. 8a shows a user terminal device 10, which is formed as a smart phone here. The user terminal device 10 has a touch screen 18 as an I/O unit 16. At present, information content, that is, a picture 19, is displayed on the touch screen 18. Alternatively, the information content may also be text, audio and/or video and the like. Besides, the information content may also involve a uniform resource locator and a multimedia content identifier of the currently displayed content, or may involve a current screen display of the user terminal device 10.

Here, the user terminal device 10 points to one output device 2' of the vehicle 1. This may be determined by the vehicle 1, in particular its head unit 5, in the manner previously introduced. In order to enable the user terminal device 10 to interact with the pointed output device 2', the hand 20 of the vehicle occupant may tap a send button 21 on the touch screen 18 of the user terminal device 10. In response to this operation of the user terminal device 10, data communication is performed between the user terminal device 10 and the vehicle 1, and the picture 19 of the user terminal device 10 is sent to the pointed output device 2'. Next, as shown in FIG. 8b, a picture copy 19' of the picture 19 is displayed on the pointed output device 2'. In this way, the information content of the user terminal device 10 can be shared to the pointed output device 2', so that the vehicle occupant may individually configure the pointed output device 2', thereby making better use of the device resources of the vehicle and improving the comfort and availability of the vehicle during the travel of the vehicle. In this process, the information content of the user terminal device 10 and in particular the instructions generated based on the operation of the user terminal device 10 may be sent to the vehicle 1 through the device interface 13 of the communication unit 12 and received by the vehicle interface 7 of the communication system 6, and the head unit 5 delivers the information content to the infotainment system 9 and presents the same in the pointed output device 2' of the infotainment system 9 based on the instructions.

As an alternative to sending a file of the picture 19 itself, it is also possible to consider sending its metadata, such as a uniform resource locator or a multimedia content identifier. Further, according to the metadata from the user terminal device 10, the content corresponding to the metadata is played on the pointed output device 2'.

FIGS. 8a and 8b show an interaction mode between the user terminal device 10 and the pointed output device 2': sending the information content of the user terminal device 10 to the pointed output device 2'.

However, according to the present invention, as shown in FIGS. 9a and 9b, another possible interaction mode is to send the output content on the pointed output device 2' to the user terminal device 10.

In FIG. 9a, the user terminal device 10 first points to one output device 2' of the vehicle 1. This may also be determined by the vehicle 1, in particular its head unit 5, in the manner previously introduced. Here, the video 23 is being played on the pointed output device 2'. At this time, the hand 20 of the vehicle occupant may tap a receive button 22 on the touch screen 18 of the user terminal device 10. In response to this operation of the user terminal device 10, data communication is performed between the vehicle 1 and the user terminal device 10, and the video 23 being played on the pointed output device 2' is sent to the user terminal device 10. Next, as shown in FIG. 9b, a video copy 23' of the video 23 may be played on the pointed output device 2'. In this process, it is possible to first send the information content of the user terminal device 10 and in particular the instructions generated based on the operation of the user terminal device 10 to the vehicle 1 through the device interface 13 of the communication unit 12 and receive the same by the vehicle interface 7 of the communication system 6. Based on the above-described instruction, the vehicle 5 sends back the output content on the pointed output device 2' to the user terminal device 10 via the same data connection path. In this way, the user terminal device 10 may also obtain the output content on the vehicle 1, thereby providing a way to share information from the vehicle 1 to the user terminal device 10, and expanding the operation possibility of the output device 2 of the vehicle 1.

Not limited to this, the output content may also be text, audio and/or picture. Besides, the information content may also involve a uniform resource locator and a multimedia content identifier of the currently output content, or may involve a current screen display of the user terminal device 10. Instead of sending a file of the video 23 itself, it is also possible to consider sending its metadata, such as a uniform resource locator or a multimedia content identifier. Further, according to the metadata from the pointed output device 2', the content corresponding to the metadata is played on the user terminal device 10.

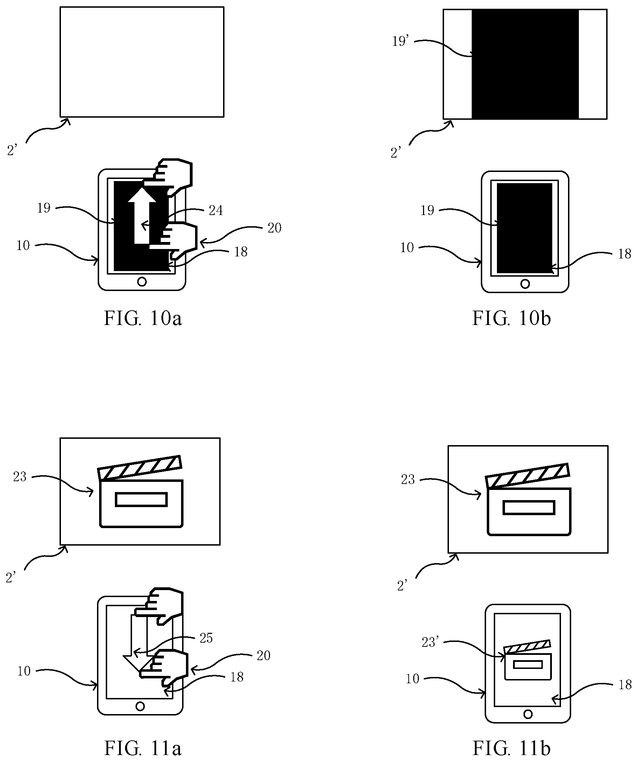

FIGS. 10a and 10b show another interaction mode between the user terminal device and the pointed output device. Unlike the circumstances shown in FIGS. 8a and 8b, the interaction between the user terminal device 10 and the pointed output device 2' is triggered by an additional operation of the user terminal device 10 by the vehicle occupant. Here, the hand of the vehicle occupant performs a slide-up gesture 24 on the touch screen 18 of the user terminal device 10, and data communication is performed between the user terminal device 10 and the vehicle 1 accordingly, to enable interaction between the user terminal device 10 and the pointed output device 2', that is, the information content (the picture 19 here) of the user terminal device 10 is sent to the pointed output device 2' and presented on the pointed output device 2'.

FIGS. 11a and 11b show another interaction mode between the user terminal device and the pointed output device. Unlike the circumstances shown in FIGS. 9a and 9b, the interaction between the user terminal device 10 and the pointed output device 2' is triggered by an additional operation of the user terminal device 10 by the vehicle occupant. Here, the hand of the vehicle occupant performs a pull-down gesture 25 on the touch screen 18 of the user terminal device 10, and data communication is performed between the user terminal device 10 and the vehicle 1 accordingly, to enable interaction between the user terminal device 10 and the pointed output device 2', that is, the output content (the video 23 here) of the pointed output device 2' is sent to the user terminal device 10 and presented on the user terminal device 10.

As an alternative to the slide-up and pull-down gestures performed on the touch screen 18 of the user terminal device 10 in FIGS. 10a and 11a, it is also possible to consider other gestures, for example a throw gesture of a plurality of fingers from close to open on the touch screen 18 and/or a pinching gesture of a plurality of fingers from open to close on the touch screen 18.

In addition, it is also possible to consider that the user terminal device 10 performs movement as a whole. The movement being preferably to cause the user terminal device 10 as a whole to move abruptly, in particular towards or against the pointed output device 2'. In this way, the vehicle occupant may simply perform an operation with one hand, so as to trigger the interaction between the user terminal device 10 and the pointed output device 2'. Moreover, such movement may also be detected by the ultra-wideband anchor antenna 3 of the vehicle 1, so that it is possible to omit sending the instructions generated based on the operation of the user terminal device 10.

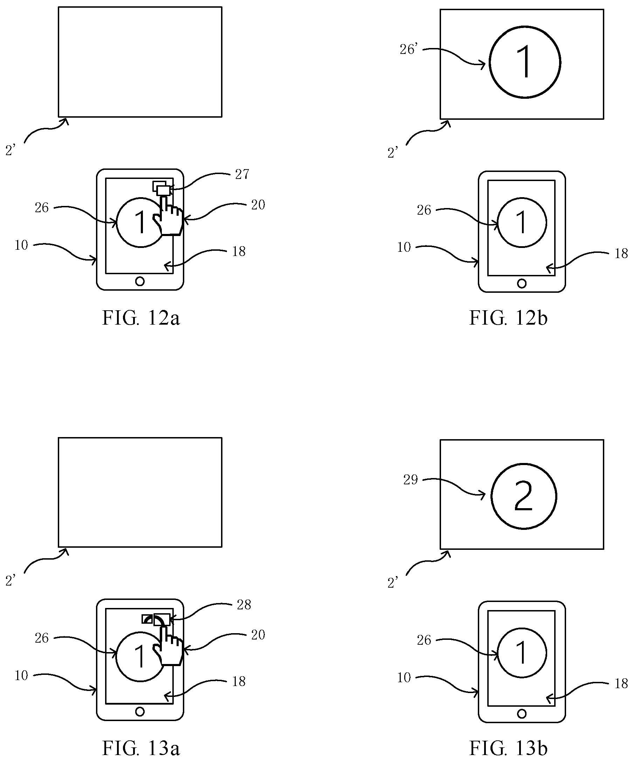

FIGS. 12a and 12b show another interaction mode between the user terminal device and the pointed output device. Here, in the case where the user terminal device 10 points to the output device 2', the first screen display 26 is currently being performed on the touch screen 18 of the user terminal device 10. The first screen display 26 of the user terminal device 10 may be mirrored on the pointed output device 2' by tapping the screen mirroring button 27 on the touch screen 18 by the hand 20 of the vehicle occupant. In this way, the same screen display as the user terminal device 10, that is, the first screen display mirror image 26', is performed on the pointed output device 2'. Thus, the vehicle occupant may comfortably utilize the output device 2' with a larger screen in the vehicle 1. Here, the screen display of the user terminal device 10 may be streamed to the vehicle 1.

FIGS. 13a and 13b show another interaction mode between the user terminal device and the pointed output device. Here, in the case where the user terminal device 10 points to the output device 2', the first screen display 26 is also currently being performed on the touch screen 18 of the user terminal device 10. The screen extending button 28 on the touch screen 18 may be tapped by the hand 20 of the vehicle occupant, thereby extending another screen display for the user terminal device 10. As shown in FIG. 13b, the pointed output device 2' will perform a second screen display 29 as an extended screen of the user terminal device 10. Thus, the vehicle occupant may comfortably utilize the output device 2' with a larger screen in the vehicle 1. The second screen display 29 of the user terminal device 10 may also be streamed to the vehicle 1.

In the same way, it is also possible to consider mirroring the screen display of the pointed output device 2' onto the user terminal device 10; and/or using the user terminal device 10 as an extended device of the pointed output device 2'.

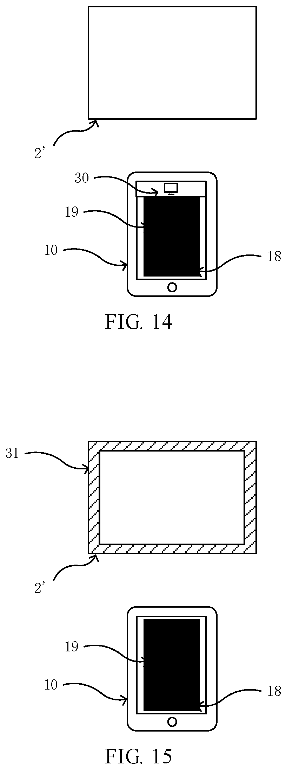

FIG. 14 shows a possible screen feedback on the user terminal device when the user terminal device points to the output device. Here, when the user terminal device 10 points to the output device 2', the output device pointed by the user terminal device 10 may be prompted on the user terminal device 10, so that the vehicle occupants are able to know that their desired output devices have been pointed, thereby more accurately confirming the pointed output device for subsequent operation. The prompt may be in the form of an icon, a text, an audio, and the like. FIG. 14 shows that the icon 30 representing the display device at the top of the screen of the user terminal device 10 prompts the vehicle occupant that the user terminal device 10 currently points to the output device 2'. In combination with various interaction modes described above, at this time, the vehicle occupant may realize the interaction between the user terminal device and the pointed output device by tapping the icon 30, sliding a finger from the area of the picture 19 up to the icon, or directly making the user terminal device 10 suddenly move towards the pointed output device 2'.

FIG. 15 shows a possible screen feedback on the output device when the user terminal device points to the output device. Here, when the user terminal device 10 points to the output device 2', it may be prompted on the pointed output device 2' that the output device 2' is pointed by the user terminal device 10, so that the vehicle occupants are able to know that the user terminal device 10 has pointed to their desired output devices, thereby more accurately confirming the pointed output device for subsequent operation. Here, one striped border 31 may be displayed on the pointed output device 2' to thus present that it is aligned by the user terminal device 10.

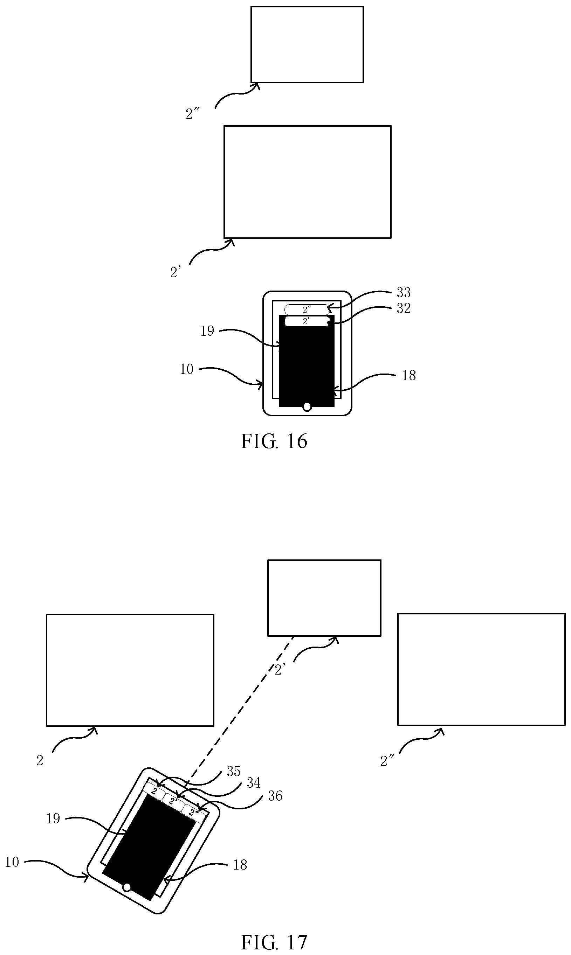

FIG. 16 shows a circumstance when the user terminal device points to the output device. Here, the vehicle occupant is seated in the rear of the vehicle 1, and the vehicle occupant aligns his user terminal device 10 with the pointed output device 2' on the back of the front seat, for example, a display on the back of the driver's seat or a display on the back of the front passenger's seat. However, referring to a schematic view of FIG. 5, it is possible in a particular circumstance that the user terminal device 10 also points to the output device 2" for the driver or the front passenger, for example a HUD in front of the driver or a display in front of the front passenger. In this case, it is preferable to prompt a plurality of output devices, i.e., the output devices 2' and 2" pointed by the user terminal device 10 on the touch screen 18 of the user terminal device 10. As shown in FIG. 16, these two output devices may be presented by icons 32 and 33 representing different output devices. Thus, the vehicle occupant is prompted that the user terminal device 10 currently points to these two output devices. In combination with various interaction modes described above, at this time, the vehicle occupant may realize the interaction between the user terminal device and the output device by tapping the icon 32 or 33, or sliding a finger from the area of the picture 19 up to a certain icon. It is also possible that the vehicle occupant may simultaneously send the picture 19 of the user terminal device 10 to these two output devices and simultaneously display it on the same through the throw gesture as described above.

In particular, the spatially closest output device has the highest priority. For example, the spatially closest pointed output device 2' may be closer to the picture 19 in the touch screen 18, or it is possible to consider displaying the output device with a larger icon.

FIG. 17 shows another circumstance when the user terminal device points to the output device. Here, the output device pointed by the user terminal device 10 and the output devices in the vicinity thereof may be prompted on the user terminal device 10. As shown in FIG. 17, the vehicle occupant seated in the back row currently aligns his user terminal device 10 with the output device 2', for example, a central display located in the middle of the dashboard. In order to provide more abundant options for the vehicle occupants and avoid the pointing deviation of the user terminal device 10 resulting from the shaking and turning of the vehicle, in this case, it is preferable to prompt the pointed output device 2' and the output devices 2 and 2" in the vicinity thereof on the touch screen 18 of the user terminal device 10, that is, the display on the back of the driver's seat and the display on the back of the front passenger's seat. These three output devices may be presented by icons 34, 35 and 36 representing different output devices. In combination with various interaction modes described above, at this time, the vehicle occupant may realize the interaction between the user terminal device and the output device by tapping one of the icons 34, 35 and 36, or sliding a finger from the area of the picture 19 up to a certain icon. It is also possible that the vehicle occupant may send the picture 19 of the user terminal device 10 to these three output devices and simultaneously present it on the same through the throw gesture as described above.

Here, the currently pointed output device may have the highest priority. For example, the pointed output device 2' may be centrally arranged between various icons, or it is possible to consider displaying the pointed output device 2' with a larger icon.

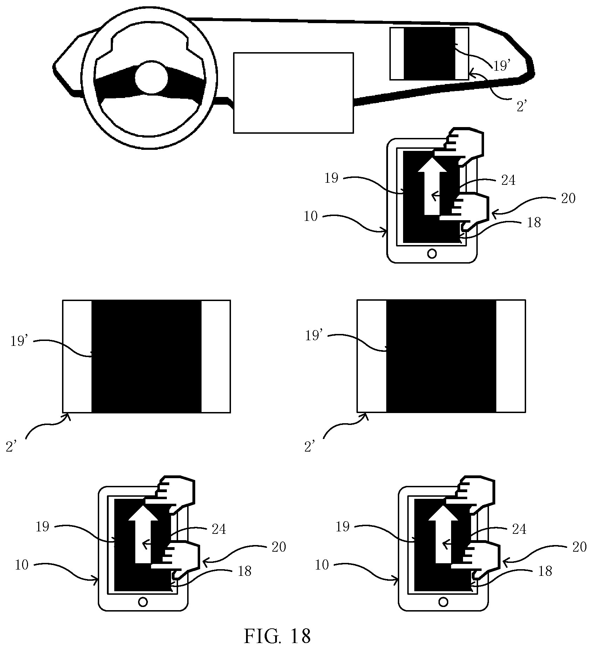

FIG. 18 shows one scenario of interaction between a plurality of user terminal devices and respective pointing output devices in the vehicle. Here, three user terminal devices 10 located in the vehicle 1 interact with the pointed output devices 2' located in his front respectively. Thus, each vehicle occupant may interact with the output device assigned to this vehicle occupant by means of its user terminal device 10. During the interaction, the vehicle occupant only needs to align his user terminal device 10 with the output device in his front and perform simple operations on the user terminal device 10 so as to realize the interaction, for example, the information content of the user terminal device 10 is sent to the pointed output device 2', and/or the output content of the pointed output device 2' is sent to the user terminal device 10. During this process, compared with a traditional method of tapping a button, a touch screen and the like in the vehicle, the vehicle occupants can comfortably realize the interaction by hardly changing their sitting pose.

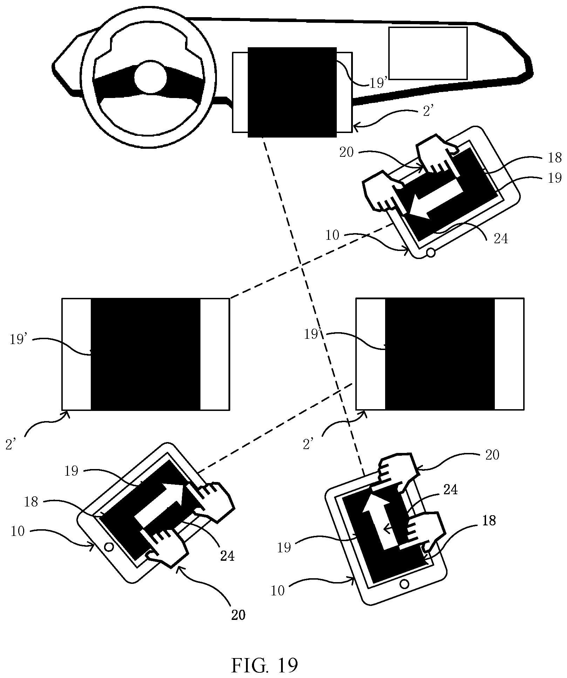

FIG. 19 shows another scenario of interaction between a plurality of user terminal devices and respective pointing output devices in the vehicle. Here, since the user terminal device 10 may occupy any position and attitude in an interior space of the vehicle 1, as long as the user terminal device 10 is aligned with a corresponding output device of the vehicle 1, it may be realized that the user terminal device 10 may interact with the output devices assigned to other vehicle occupants, which undoubtedly greatly expands the operability of each output device of the vehicle. For example, the vehicle occupant seated in the rear seat may interact with the output device in the front of the vehicle, while the vehicle occupant seated in the front seat may also interact with the output device in the rear of the vehicle. In the case as shown in FIG. 9, the user terminal device 10 in the upper right of the drawing may interact with the output device in the lower left, that is, the display on the back of the driver's seat. The user terminal device 10 in the lower left of the drawing may interact with the output device in the lower right, that is, the display located on the back of the front passenger's seat; the user terminal device 10 in the lower right of the drawing may interact with the output device in the front of the vehicle, that is, the central display located in the middle of the dashboard.

The present invention may also be a computer program product. The computer program product may include a computer-readable storage medium having computer-readable program instructions thereon for causing a processor to perform various aspects of the present invention.

The computer-readable storage medium may be a tangible device that may save and store instructions for use by an instruction execution device. The computer-readable storage medium may be, for example, but not limited to, an electronic storage device, a magnetic storage device, an optical storage device, an electromagnetic storage device, a semiconductor storage device, or any suitable combination of the above-described devices.

The computer-readable program instruction may be executed entirely on the user's computer, partly on the user's computer, executed as an independent software package, partly on the user's computer and partly executed on a remote computer, or entirely executed on the remote computer or server. **In** some embodiments, an electronic circuit system including, for example, a programmable logic circuit system, a field programmable gate array (FPGA), or a programmable logic array (PLA) may execute computer-readable program instructions by using state information of computer readable program instructions of a personalized electronic circuit system, so as to perform various aspects of the present invention.

Various aspects of the present invention have been described herein with reference to the flowchart and/or block diagram of the method, system, and computer program product according to the embodiments of the present invention. It should be understood that each block in the flowchart and/or block diagram and a combination of blocks in the flowchart and/or block diagram may be implemented by computer-readable program instructions.

The present invention is not limited to the embodiments shown. The positional descriptions selected in the specification, for example, up, down, left, right, and the like, refer to direct descriptions and the illustrated accompanying drawings and can be transferred for use in new positions according to the meanings when the positions change.

The features disclosed in the present application which may be implemented individually and in any combined manner, are important for implementing aspects of different design solutions and may be realized.

Although some aspects are depicted in association with the device, it should be understood that: these aspects also pertain to descriptions of a corresponding method, such that a component of a module or an apparatus of a system may also be understood as one step of the corresponding method or one feature of the step of the method. Similar to this, aspects depicted in association with one step of the method or as one step of the method also pertain to descriptions of corresponding modules, details or features of the corresponding device.

Thus, the computer readable storage medium may be machine readable or computer readable. Accordingly, in some embodiments, the computer readable storage medium includes a data carrier having executable instructions that are capable of such cooperative function with a programmable computer system or a programmable hardware assembly, such as to implement one of the methods described here. Thus, one embodiment is a data carrier, a digital storage medium or a computer readable storage medium, on which there is recorded a program for implementing one of the methods described herein.

Moreover, another embodiment is a data stream, a signal order, or a signal sequence, which is a program for implementing one of the methods described herein. The data stream, signal order or signal sequence may, for example, be configured for transmission via a data communication connection, for example via Internet or other networks. Thus, the embodiment may also be a signal sequence representing data, which is adapted to be sent via a network or data communication connection, wherein the data is a program.

The scope of the invention is set out in the appended claims.

## Claims

1. Method (100, 100') for interacting between a user terminal device and a vehicle, wherein said vehicle is provided with a plurality of output devices, said method comprising:
acquiring (101, 101') a position and attitude of the user terminal device in an interior space of the vehicle;
determining an output device pointed by the user terminal device based on the acquired position and attitude;
performing data communication between the user terminal device and the vehicle to enable interaction between the user terminal device and the pointed output device in response to an operation of the user terminal device,
**characterized in that** the position of the user terminal device in the interior space of the vehicle is acquired through ultrawideband positioning technology by means of a plurality of ultrawideband anchor antennas distributed in the vehicle and an ultrawideband positioning tag provided on the user terminal device (1011), and the attitude of the user terminal device in the interior space of the vehicle is derived by a rotation transform of a device attitude vector sensed by an attitude sensor of the user terminal device based on a body attitude vector sensed by a body attitude sensing means of the vehicle (1012).

2. Method according to claim 1, **characterized in that** the operation of the user terminal device comprises:
tapping a button on a touch screen of the user terminal device, said button being preferably a sending button, a receiving button, a screen mirroring button and/or a screen extending button; and/or
performing a gesture on the touch screen of the user terminal device, said gesture being preferably a slide up, a pull down, a throw and/or a pinch; and/or
moving the user terminal device as a whole, said movement being preferably to cause the user terminal device as a whole to move abruptly, in particular towards or against the pointed output device.

3. Method according to claim 1 or 2, **characterized in that** said interaction of said user terminal device with the pointed output device comprises: transmitting information content of said user terminal device to the pointed output device, and/or transmitting output content on the pointed output device to said user terminal device.

4. Method according to claim 3, **characterized in that**
by transmitting the information content of said user terminal device to the pointed output device: playing text, pictures, audio and/or video from the user terminal device on the pointed output device; playing content corresponding to said metadata on the pointed output device according to metadata from the user terminal device; mirroring the screen display of the user terminal device to the pointed output device; and/or using the pointed output device as an extended device of the user terminal device;
and/or
by transmitting the output content on the pointed output device to said user terminal device: playing text, pictures, audio and/or video from the pointed output device on the user terminal device; playing the content corresponding to said metadata on the user terminal device according to metadata from the pointed output device; mirroring the screen display of the pointed output device to the user terminal device and/or using the user terminal device as an extended device of the pointed output device.

5. Method according to one of claims 1 to 4, **characterized in that** the output device pointed by the user terminal device is prompted on said user terminal device, and/or the output device is prompted to be pointed by the user terminal device on the output device pointed by the user terminal device.

6. Method according to claim 5, **characterized in that** the output device pointed by the user terminal device and its neighboring output devices are prompted on said user terminal device, and/or a plurality of output devices pointed by the user terminal device are prompted on said user terminal device, in particular the spatially closest output device having the highest priority.

7. Computer readable medium on which a computer program is stored, which computer program when executed by a processor implements the method for interacting between a user terminal device and a vehicle according to one of claims 1 to 6.

8. Vehicle (1) capable of data connection with a user terminal device, said vehicle being provided with a plurality of output devices, said vehicle including a plurality of ultra-wideband anchor antennas (3) distributed in the vehicle and a body attitude sensing means (4), wherein said vehicle is configured to:
acquire (101, 101') a position and attitude of the user terminal device in an interior space of the vehicle;
determining the output device pointed by the user terminal device based on the acquired position and the attitude; and
performing data communication with the user terminal device to enable interaction between the user terminal device and the pointed output device in response to an operation of the user terminal device,
**characterized in that** the position of the user terminal device in the interior space of the vehicle is acquired through ultrawideband positioning technology by means of the plurality of ultrawideband anchor antennas distributed in the vehicle and an ultrawideband positioning tag provided on the user terminal device (1011), and the attitude of the user terminal device in the interior space of the vehicle is derived by a rotation transform of a device attitude vector sensed by an attitude sensor of the user terminal device based on a body attitude vector sensed by the body attitude sensing means of the vehicle (1012).

9. Interactive system comprising a user terminal device and a vehicle according to claim 8.

## Patentansprüche

1. Verfahren (100, 100') zum Interagieren zwischen einem Benutzerendgerät und einem Fahrzeug, wobei das Fahrzeug mit mehreren Ausgabegeräten versehen ist, wobei das Verfahren Folgendes umfasst:
Erfassen (101, 101') einer Position und Lage des Benutzerendgeräts in einem Innenraum des Fahrzeugs;
Bestimmen eines Ausgabegeräts, auf welches das Benutzerendgerät zeigt, basierend auf der erfassten Position und Lage;
Durchführen einer Datenkommunikation zwischen dem Benutzerendgerät und dem Fahrzeug, um eine Interaktion zwischen dem Benutzerendgerät und dem gezeigten Ausgabegerät als Reaktion auf eine Bedienung des Benutzerendgeräts zu ermöglichen,
**dadurch gekennzeichnet, dass** die Position des Benutzerendgeräts im Innenraum des Fahrzeugs über Ultrabreitband-Positionsbestimmungstechnologie mittels mehrerer in dem Fahrzeug verteilter Ultrabreitband-Ankerantennen und eines am Benutzerendgerät (1011) bereitgestellten Ultrabreitband-Positionsbestimmungsetiketts erfasst wird, und die Lage des Benutzerendgeräts im Innenraum des Fahrzeugs durch eine Rotationstransformation eines Gerätelagevektors abgeleitet wird, der durch einen Lagesensor des Benutzerendgeräts basierend auf einem Karosserielagevektor abgetastet wird, der durch ein Karosserielagesensormittel des Fahrzeugs (1012) abgetastet wird.

2. Verfahren nach Anspruch 1, **dadurch gekennzeichnet, dass** die Bedienung des Benutzerendgeräts Folgendes umfasst:
Tippen einer Taste auf einem Berührungsbildschirm des Benutzerendgeräts, wobei die Taste vorzugsweise eine Sendetaste, eine Empfangstaste, eine Bildschirmspiegelungstaste und/oder eine Bildschirmerweiterungtaste ist; und/oder
Durchführen einer Geste auf dem Berührungsbildschirm des Benutzerendgeräts, wobei die Geste vorzugsweise ein Streichen nach oben, ein Ziehen nach unten, ein Werfen und/oder ein Zusammenführen der Finger ist; und/oder
Bewegen des Benutzerendgeräts als Ganzes, wobei die Bewegung vorzugsweise bewirkt, dass sich das Benutzerendgerät als Ganzes schlagartig, insbesondere zu dem gezeigten Ausgabegerät hin oder auf dieses zu bewegt.

3. Verfahren nach Anspruch 1 oder 2, **dadurch gekennzeichnet, dass** die Interaktion des Benutzerendgeräts mit dem gezeigten Ausgabegerät Folgendes umfasst: Übertragen von Informationsinhalt des Benutzerendgeräts an das gezeigte Ausgabegerät und/oder Übertragen von Ausgabeinhalt auf dem gezeigten Ausgabegerät an das Benutzerendgerät.

4. Verfahren nach Anspruch 3, **dadurch gekennzeichnet, dass**
durch Übertragen des Informationsinhalts des Benutzerendgeräts an das gezeigte Ausgabegerät:
Wiedergeben von Text, Bildern, Audio und/oder Video von dem Benutzerendgerät auf dem gezeigte Ausgabegerät;
Wiedergeben von Inhalt entsprechend den Metadaten auf dem gezeigten Ausgabegerät gemäß Metadaten von dem Benutzerendgerät; Spiegeln der Bildschirmanzeige des Benutzerendgeräts zu dem gezeigten Ausgabegerät;
und/oder Verwenden des gezeigten Ausgabegerät als ein erweitertes Gerät des Benutzerendgeräts;
und/oder
durch Übertragen des Ausgabeinhalts auf dem gezeigten Ausgabegerät an das Benutzerendgerät: Wiedergeben von Text, Bildern, Audio und/oder Video von dem gezeigten Ausgabegerät auf dem Benutzerendgerät; Wiedergeben des Inhalts entsprechend den Metadaten auf dem Benutzerendgerät gemäß Metadaten von dem gezeigten Ausgabegerät; Spiegeln der Bildschirmanzeige des gezeigten Ausgabegeräts zu dem Benutzerendgerät und/oder Verwenden des Benutzerendgeräts als ein erweitertes Gerät des gezeigten Ausgabegeräts.

5. Verfahren nach einem der Ansprüche 1 bis 4, **dadurch gekennzeichnet, dass** das Ausgabegerät, auf das das Benutzerendgerät zeigt, auf dem Benutzerendgerät angefordert wird, und/oder ein Zeigen auf das Ausgabegerät durch das Benutzerendgerät auf dem Ausgabegerät, auf das das Benutzerendgerät zeigt, angefordert wird.

6. Verfahren nach Anspruch 5, **dadurch gekennzeichnet, dass** das Ausgabegerät, auf das das Benutzerendgerät zeigt, und seine benachbarten Ausgabegeräte auf dem Benutzerendgerät angefordert werden, und/oder mehrere Ausgabegeräte, auf die das Benutzerendgerät zeigt, auf dem Benutzerendgerät angefordert werden, wobei insbesondere das räumlich am nächsten gelegene Ausgabegerät die höchste Priorität aufweist.

7. Computerlesbares Medium, auf dem ein Computerprogramm gespeichert ist, wobei das Computerprogramm bei Ausführung durch einen Prozessor das Verfahren zum Interagieren zwischen einem Benutzerendgerät und einem Fahrzeug nach einem der Ansprüche 1 bis 6 implementiert.

8. Fahrzeug (1), das zu einer Datenverbindung mit einem Benutzerendgerät in der Lage ist, wobei das Fahrzeug mit mehreren Ausgabegeräten versehen ist, wobei das Fahrzeug mehrere in dem Fahrzeug verteilte Ultrabreitband-Ankerantennen (3) und ein Karosserielagesensormittel (4) beinhaltet,
wobei das Fahrzeug zu Folgendem ausgelegt ist:
Erfassen (101, 101') einer Position und Lage des Benutzerendgeräts in einem Innenraum des Fahrzeugs;
Bestimmen des Ausgabegeräts, auf welches das Benutzerendgerät zeigt, basierend auf der erfassten Position und der Lage; und
Durchführen einer Datenkommunikation mit dem Benutzerendgerät, um eine Interaktion zwischen dem Benutzerendgerät und dem gezeigten Ausgabegerät als Reaktion auf eine Bedienung des Benutzerendgeräts zu ermöglichen,
**dadurch gekennzeichnet, dass** die Position des Benutzerendgeräts im Innenraum des Fahrzeugs über Ultrabreitband-Positionsbestimmungstechnologie mittels der mehreren in dem Fahrzeug verteilten Ultrabreitband-Ankerantennen und eines am Benutzerendgerät (1011) bereitgestellten Ultrabreitband-Positionsbestimmungsetiketts erfasst wird, und die Lage des Benutzerendgeräts im Innenraum des Fahrzeugs durch eine Rotationstransformation eines Gerätelagevektors abgeleitet wird, der durch einen Lagesensor des Benutzerendgeräts basierend auf einem Karosserielagevektor abgetastet wird, der durch das Karosserielagesensormittel des Fahrzeugs (1012) abgetastet wird.

9. Interaktives System, das ein Benutzerendgerät und ein Fahrzeug nach Anspruch 8 umfasst.

## Revendications

1. Procédé (100, 100') pour interaction entre un dispositif terminal utilisateur et un véhicule, dans lequel ledit véhicule est pourvu d'une pluralité de dispositifs de sortie, ledit procédé comprenant les faits :
d'acquérir (101, 101') une position et une orientation du dispositif terminal utilisateur dans un espace intérieur du véhicule ;
de déterminer un dispositif de sortie dirigé, par le dispositif terminal utilisateur, sur la base de la position et de l'orientation acquises ;
de réaliser une communication de données entre le dispositif terminal utilisateur et le véhicule pour permettre l'interaction entre le dispositif terminal utilisateur et le dispositif de sortie dirigé, en réponse à une opération du dispositif terminal utilisateur,
**caractérisé en ce que** la position du dispositif terminal utilisateur dans l'espace intérieur du véhicule est acquise par l'intermédiaire de technologie de positionnement à ultra-large bande au moyen d'une pluralité d'antennes d'ancrage à ultra-large bande distribuées dans le véhicule et d'une étiquette de positionnement à ultra-large bande prévue sur le dispositif terminal utilisateur (1011), et l'orientation du dispositif terminal utilisateur dans l'espace intérieur du véhicule est déduite par une transformée de rotation d'un vecteur d'orientation de dispositif détecté par un capteur d'orientation du dispositif terminal utilisateur sur la base d'un vecteur d'orientation de corps détecté par un moyen de détection d'orientation de corps du véhicule (1012).

2. Procédé selon la revendication 1, **caractérisé en ce que** l'opération du dispositif terminal utilisateur comprend les faits :
de taper sur un bouton sur un écran tactile du dispositif terminal utilisateur, ledit bouton étant de préférence un bouton d'envoi, un bouton de réception, un bouton de duplication en miroir d'écran et/ou un bouton d'extension d'écran ; et/ou
de réaliser un geste sur l'écran tactile du dispositif terminal utilisateur, ledit geste étant de préférence un geste consistant à faire glisser vers le haut, à faire dérouler, à lancer, et/ou à pincer ; et/ou
de mouvoir le dispositif terminal utilisateur dans l'ensemble, ledit mouvement étant de préférence destiné à amener le dispositif terminal utilisateur dans l'ensemble à se mouvoir brusquement, en particulier vers ou contre le dispositif de sortie dirigé.

3. Procédé selon la revendication 1 ou 2, **caractérisé en ce que** ladite interaction dudit dispositif terminal utilisateur avec le dispositif de sortie dirigé comprend les faits : de transmettre un contenu d'informations dudit dispositif terminal utilisateur au dispositif de sortie dirigé, et/ou de transmettre un contenu de sortie sur le dispositif de sortie dirigé audit dispositif terminal utilisateur.

4. Procédé selon la revendication 3, **caractérisé en ce que**
par le fait de transmettre le contenu d'informations dudit dispositif terminal utilisateur au dispositif de sortie dirigé : un texte, des images, un audio, et/ou une vidéo sont lus à partir du dispositif terminal utilisateur sur le dispositif de sortie dirigé ; un contenu correspondant auxdites métadonnées sur le dispositif de sortie dirigé est lu selon des métadonnées provenant du dispositif terminal utilisateur ; l'affichage d'écran du dispositif terminal utilisateur est dupliqué en miroir sur le dispositif de sortie dirigé ; et/ou le dispositif de sortie dirigé est utilisé en tant que dispositif étendu du dispositif terminal utilisateur ;
et/ou
par le fait de transmettre le contenu de sortie sur le dispositif de sortie dirigé audit dispositif terminal utilisateur : un texte, des images, un audio, et/ou une vidéo sont lus à partir du dispositif de sortie dirigé sur le dispositif terminal utilisateur ; le contenu correspondant auxdites métadonnées sur le dispositif terminal utilisateur est lu selon des métadonnées provenant du dispositif de sortie dirigé ; l'affichage d'écran du dispositif de sortie dirigé est dupliqué en miroir sur le dispositif terminal utilisateur et/ou le dispositif terminal utilisateur est utilisé en tant que dispositif étendu du dispositif de sortie dirigé.

5. Procédé selon l'une des revendications 1 à 4, **caractérisé en ce que** le dispositif de sortie, dirigé par le dispositif terminal utilisateur, est guidé sur ledit dispositif terminal utilisateur, et/ou le dispositif de sortie est guidé pour être dirigé par le dispositif terminal utilisateur sur le dispositif de sortie dirigé par le dispositif terminal utilisateur.

6. Procédé selon la revendication 5, **caractérisé en ce que** le dispositif de sortie dirigé par le dispositif terminal utilisateur et ses dispositifs de sortie voisins sont guidés sur ledit dispositif terminal utilisateur, et/ou une pluralité de dispositifs de sortie dirigés par le dispositif terminal utilisateur sont guidés sur ledit dispositif terminal utilisateur, en particulier le dispositif de sortie spatialement le plus proche ayant la priorité la plus élevée.

7. Support lisible par ordinateur sur lequel un programme d'ordinateur est stocké, lequel programme d'ordinateur, lorsqu'il est exécuté par un processeur, met en œuvre le procédé pour interaction entre un dispositif terminal utilisateur et un véhicule selon l'une des revendications 1 à 6.

8. Véhicule (1) capable de connexion de données avec un dispositif terminal utilisateur, ledit véhicule étant pourvu d'une pluralité de dispositifs de sortie, ledit véhicule incluant une pluralité d'antennes d'ancrage à ultra-large bande (3) distribuées dans le véhicule et un moyen de détection d'orientation de corps (4),
dans lequel ledit véhicule est configuré pour :
acquérir (101, 101') une position et une orientation du dispositif terminal utilisateur dans un espace intérieur du véhicule ;
déterminer le dispositif de sortie dirigé par le dispositif terminal utilisateur sur la base de la position et de l'orientation acquises ; et
réaliser une communication de données avec le dispositif terminal utilisateur pour permettre l'interaction entre le dispositif terminal utilisateur et le dispositif de sortie dirigé, en réponse à une opération du dispositif terminal utilisateur,
**caractérisé en ce que** la position du dispositif terminal utilisateur dans l'espace intérieur du véhicule est acquise par l'intermédiaire de technologie de positionnement à ultra-large bande au moyen de la pluralité d'antennes d'ancrage à ultra-large bande distribuées dans le véhicule et d'une étiquette de positionnement à ultra-large bande prévue sur le dispositif terminal utilisateur (1011), et l'orientation du dispositif terminal utilisateur dans l'espace intérieur du véhicule est déduite par une transformée de rotation d'un vecteur d'orientation de dispositif détecté par un capteur d'orientation du dispositif terminal utilisateur sur la base d'un vecteur d'orientation de corps détecté par le moyen de détection d'orientation de corps du véhicule (1012).

9. Système interactif, comprenant un dispositif terminal utilisateur et un véhicule selon la revendication 8.
